# EUROPEAN PATENT SPECIFICATION

(11) **EP 3 793 765 B1**
(45) Date of publication and mention of the grant of the patent: **24.01.2024**
(21) Application number: 19725093.9
(22) Date of filing: 15.05.2019
(51) Int. Cl.: B23K 26/06, B22F 3/105, B23K 26/342, B23K 26/082, B23K 26/042

(54) **LASER BEAM SCANNER WITH LASER BEAMS POSITIONING OPTIC, OPTICAL FIBRES AND FIBRE TERMINATION OPTIC**
LASERSTRAHLSCANNER MIT LASERSTRAHLPOSITIONIERUNGSOPTIK, GLASFASERN UND FASERABSCHLUSSOPTIK
SCANNER À FAISCEAU LASER COMPRENANT UNE OPTIQUE DE POSITIONNEMENT DE FAISCEAUX LASER, DES FIBRES OPTIQUES ET UNE OPTIQUE DE TERMINAISON DE FIBRE

(30) Priority: 15.05.2018 GB 201807830
(43) Date of publication of application: 24.03.2021
(73) Proprietor: Renishaw PLC, Wotton-under-Edge, Gloucestershire GL12 8JR (GB)
(72) Inventor: WESTON, Nicholas, John, Lothian, Edinburgh EH14 4AP (GB); MCFARLAND, Geoffrey, Wotton-under-Edge, Gloucestershire GL12 8JR (GB)
(74) Representative: Matthews, Paul
(86) International application number: PCT/EP2019/062460
(87) International publication number: WO 2019/219739

(56) References cited:
- DE-A1-102006 004 085
- JP-A- H04 327 391
- US-A1- 2003 214 571
- US-A1- 2007 221 639
- US-A1- 2016 114 427
- US-A1- 2016 279 707

## Description

### Field of Invention

This invention concerns a laser beam scanner and, in particular, but not exclusively, a laser beam scanner for an additive manufacturing (AM) apparatus, such as a powder bed additive manufacturing apparatus.

### Background

In powder bed additive manufacturing objects are produced through layer-by-layer solidification of powder material. There are various methods of powder bed additive manufacturing, including selective laser melting (SLM) and selective laser sintering (SLS).

In selective laser melting, a powder layer, such as a metal powder layer, is deposited on a powder bed in a build chamber and a scanner scans a laser beam across portions of the powder layer that correspond to a cross-section (slice) of the object being constructed. The laser beam melts the powder to form a solidified layer. After selective solidification of a layer, the powder bed is lowered by a layer thickness and a further layer of powder is spread over the surface and solidified, as required. Through this layer-by-layer process, one or more objects are formed.

A rate at which a laser based powder bed additive manufacturing process can proceed is limited by the difficulty of getting the laser power to the powder bed in an agile and accurate way. Complex scan paths require high bandwidth positioning performance from the beam positioning electro-mechanical systems and solid sections need a great deal of optical power delivered over a large area. The speed at which this can be achieved is a key determinant of the cost of AM components, the facility cost per hour of the machine being a large (often the largest) single contributor, above material costs and machine preparation.

Recently the rate has been increased significantly using multi-laser AM apparatus. Typically, these apparatus comprise a single build chamber with multiple beam delivery channels positioned above a single powder bed. Usually the areas these channels address are tiled with portions of overlap, although the example of Renishaw's RenAM^{™} 500Q has four lasers all addressing nominally the same powder bed. Each beam delivery channel comprises a laser source, two nominally orthogonal galvo-mirrors and a focusing mechanism in the form of dynamic focussing lenses such that the laser beams can be individually steered over the powder bed.

A disadvantage of multi-laser systems of this type is that each laser will require two galvo-mirrors and a focusing component. This is expensive, time-consuming to align, in need of regular servicing and sets a physical limit on the number of lasers which can be squeezed in to address the same area of powder (the most productive multi-laser arrangement) due to the physical size of the beam delivery channels.

US5508489 discloses a multiple beam laser sintering device including a sintering beam having a focal point at a powder bed and at least one defocussed laser beam incident on a region near the focal point of the focused beam. A focussing mirror provides a focussed beam to scanning mirrors. A defocussed beam passes through a hole in the mirror to the scanning mirrors. Instead of a focussing optic with a hole in it to allow the beam to pass through, a larger focussing optic may be used to reflect and focus both beams. Rather than splitting a laser beam to form the focussed and defocussed laser beams, two independent laser sources may be used.

US2003/0214571 A1 discloses exposure apparatus comprising a scanner including a plurality of exposure heads. Each exposure head includes a digital micromirror device (DMD). Arranged in order on a light incident side of the DMD are a fibre array light source including a laser outgoing portion in which outgoing end portions of the optical fibres are arranged in line, a lens system which corrects the laser beams emitted from the fibre array light source to condense the laser beams on to the DMD and a mirror which reflects the laser beams transmitted to the lens system to the DMD. Outgoing end portions of the optical fibres are sandwiched between two plates having a flat surface. A transparent protecting plate such as glass is placed on the light outgoing side of the optical fibre in order to protect the end face of the optical fibre.

US2015/0165556 A1 discloses a diode laser fibre array for use in direct metal laser melting. A plurality of cylindrical lenses are positioned between the diode lasers and a plurality of optical fibres to couple each diode laser to an optical fibre. The diode laser array may include lenses at the ends of the optical fibres or the ends of the optical fibres may be shaped to provide collimated or divergent laser beams.

US2016/0114427 A1 (see for example this document as basis for the preamble) discloses a device for laser-based generative component production. The device comprises a processing head for forming five laser spots in a laser line in a processing plane. The laser spots are in each case formed from fibre-coupled diode lasers, the radiation of which is guided via the optical fibres to optical focussing elements in the processing head and is focussed using the focussing elements onto the processing plane.

US2016/0279707 A1 discloses a laser printing system for additive manufacturing comprising at least two arrays of semiconductor lasers and at least one optical element, wherein the optical element is adapted to image laser light emitted by the laser arrays to a working plane.

JPH04327391 A discloses a laser beam machine comprising a multi-axis oscillation head. Light emitted from a plurality of laser diodes is introduced into the head by a plurality of optical fibres such that the light emitted from the optical fibres is incident at different positions on an end face of a solid-state laser crystal. A pattern of laser beams is produced and this pattern can be scanned by rotation of a mirror under the control of stacked piezo elements.

DE102006004085 A1 discloses a projection arrangement comprising at least two miniaturised lasers, beam injectors, corresponding beam forming elements, a beam collimator and an XY scanner. Laser beams generated by miniature lasers are coupled into single mode fibres. The optical fibres are brought together in a plug such that the fibre outputs are immediately adjacent. This may be achieved using a ferrule having a corresponding hole.

### Summary of Invention

According to a first aspect of the invention there is provided a laser beam scanner according to claim 1.

In this way, increased laser power is delivered by the laser beam scanner to the required area, ensuring a high-percentage on-time for the lasers, without the significant increase in costs associated with providing individual optical channels for each laser beam. In additive manufacturing, typically only a small fraction of a working surface, such as a surface of a powder bed, needs to be exposed to a laser beam in each layer such that, to maximise on-time for the laser beams, it is desirable to be able to direct the laser beams to multiple locations on the working surface. Scanning the laser beams by moving the laser beams positioning optic rather than all the optics of the optical channel allows one to achieve a rapid dynamic response.

Once the output ends of the optical fibres are aligned with the termination optic, alignment of the laser beams with the optical axis of other optical components of the laser scanner, such as the laser beams positioning optic can be achieved through alignment of the fibre termination optic with the optical axis. The termination optic may be connected to a holder for holding the output ends of the plurality of optical fibres. The holder may comprise a plurality of channels for receiving and aligning the output ends of the plurality of optical fibres with the termination optic. The termination optic may comprise a contoured surface forming a plurality of lenses for collimating and/or focussing each laser beam. The termination optic may be connected to the holder such that insertion of the optical fibres into the channels aligns the output ends of each optical fibre with a corresponding one of the lenses of the contoured surface. Alternatively, the termination optic may comprise a planar end surface (planar optic) through which the laser beams pass.

The termination optic and the holder may be formed from a unitary substrate. Alternatively, the termination optic and the holder may be separate parts (such as male and female parts) comprising locating formations that relatively locate the two parts when connected together. The holder and/or termination optic may be formed using a laser inscribing and chemical etching process, for example the process described in PCT/GB2018/050195.

The output ends of the optical fibres may be fused/welded to the termination optic. For example, the output ends of the optical fibres may be fused/welded to the termination optic by contacting the optical fibres with a surface of the termination optic and transmitting laser beams through the optical fibres to melt material at a contact interface between the optical fibres and the termination optic to fuse the fibre optics to the termination optic. Once the weld has cooled, the optical fibre is joined to the termination optic such that there is minimal energy loss (through reflection) at the interface between the two components. This is important in a laser beam scanner for steering high energy laser beams as even small losses at a component interface can result in significant heating of the components/laser beams scanner and subsequent distortion of the laser beam path.

The laser beams positioning optic may comprise at least one tiltable mirror, and preferably at least two tiltable mirrors, for directing the laser beams to different locations on the working surface. The laser beams positioning optic may comprise two tiltable mirrors tiltable about orthogonal axes. Alternatively or additionally, the laser beams positioning optic may comprise two tiltable mirrors tiltable about non-orthogonal axes, for example parallel axis. For example, one of the tiltable mirrors may have a faster dynamic response than the other tiltable mirror, for example as described in WO2016/156824.

The laser beam scanner may comprise a laser beam pattern adjustment optic for dynamically adjusting relative positions of the laser beams on the working surface. The laser beam pattern adjustment optic may comprise a plurality of individually displaceable portions, for example mirror portions, each displaceable portion arranged for steering one or a subset of the laser beams. In this way, displacement of the mirror portions can be used to adjust the relative positions of the laser beams on the working surface. Each portion of the laser beam pattern adjustment optic may be displaceable to subject the corresponding laser beam to relative small displacements on the working surface compared to greater displacements on the working surface of the pattern of laser beams achievable using the laser beams positioning optics, for example the tiltable mirror under the control of a galvanometer.

The laser beam scanner may comprise a focussing optic for focussing the laser beams. The focussing optic may be operable to maintain a focus of the laser beams in a working plane. The focussing optic may comprise an f-θ lens or at least one movable focussing lens dynamically adjustable with changes in position of the laser beams on the working plane.

The termination optic and output ends of the optical fibres may be arranged in a pattern such that the same pattern of laser beam spots can be achieved on the working surface for a plurality of different scanning directions. The output ends of the optical fibres may be arranged in a rotationally symmetric pattern about an optical axis of the laser beam scanner. The circular output ends of the optical fibres may be arranged in a triangular, hexagonal or square pattern (tiling). The rotational symmetry allows scanning of the laser beams in different scanning directions whilst maintaining the same spacing between tracks (hatches) formed by the laser beams.

The termination optic and output ends of the optical fibres may be rotatable about an optical axis of the laser beam scanner. This may allow for scanning in additional directions whilst maintaining the same spacing between tracks (hatches) formed by the laser beams and/or non-rotationally symmetric arrangements of the output ends of the optical fibres about the optical axis.

The laser beam scanner may comprise a controller for controlling movement of the laser beams positioning optic, the focussing optic and/or the termination optic. The controller may be arranged to control the laser beams positioning optic to scan the laser beams across the surface to form a set of first tracks with a first pass of the laser beams along the working surface and a set of second tracks with a second pass of the laser beams along the working surface, ones of the second tracks interspersed between ones of the first tracks.

The plurality of optical fibres may comprise between three and seven optical fibres.

According to a second aspect of the invention there is provided an additive manufacturing apparatus according to claim 14 comprising a laser beam scanner according to the first aspect of the invention. An additive manufacturing apparatus builds an object in a layer-by -layer manner through selective solidification of layers of material.

The additive manufacturing apparatus may be a powder bed additive manufacturing apparatus comprising a movable platform for supporting a powder bed and the laser beam scanner is arranged to scan the laser beams across a surface of the powder bed.

The additive manufacturing apparatus may comprise a controller for controlling the laser beam scanner to scan the laser beams along tracks (hatches) that extend in different scanning directions for successive layers. The controller may be arranged to control lasers that generate the laser beams such that different sub-sets of the laser beams are used to form tracks extending in different scanning directions.

The additive manufacturing apparatus may comprise a plurality of lasers for generating the laser beams delivered to the laser beam scanner by the optical fibres, the plurality of lasers comprising different types of lasers for generating laser beams having different wavelengths and/or different pulse lengths. For example, the lasers may comprise a continuous wave laser (which may be modulated to generate laser pulses having a length of at least microseconds, 10s or even 100s of microseconds) for preheating and/or solidifying material and a pulsed laser, for example a nano-, pico- or femto- second laser, which may be used for ablating material.

An optical fibre may be fused to an optical component by bringing an end of the optical fibre into contact with the optical component, passing a laser beam through the optical fibre, the laser beam having sufficient power to melt material at the interface between the end of the optical fibre and the optical component and allowing the melted material to cool to fuse the optical fibre to the optical component.

A multi-laser beam delivery optic may comprise a holder having therein a plurality of channels, each channel arranged for receiving an optical fibre, and a termination optic comprising a contoured surface forming a plurality of lenses, the termination optic connected to the holder, wherein each channel is aligned with a corresponding lens of the plurality of lenses to align an output end of an optical fibre inserted into the channel with the corresponding lens such that the corresponding lens collimates and/or focusses a laser beam delivered by the optical fibre.

The output ends of the optical fibre may be fused/welded to the termination optic. The termination optic may be integrally formed with the holder or the holder the termination optic may comprise separate pieces.

A multi-laser beam optic may comprise a plurality of mirror portions displaceable about a common pivot and, for each mirror portion, at least one actuator for driving displacement of the mirror portion.

The at least one actuator may comprise a piezoelectric actuator. The piezoelectric actuator may provide a limited stroke high frequency response. Each mirror portion may be displaceable about two, preferably orthogonal, axes by at least two spaced apart actuators. The mirror portions may be arranged around the common pivot, for example in a petal design.

### Description of Drawings

**FIGURE 1** is a cross-sectional view of a laser bean scanner according to an embodiment of the invention;
**FIGURE 2** is a cross-sectional view of an end cap for a plurality of optical fibres of the laser beam scanner shown in Figure 1;
**FIGURE 3** is an end view of the termination optic of the end cap shown in Figure 2;
**FIGURE 4** is a schematic view of a powder bed additive manufacturing apparatus according to an embodiment of the invention;
**FIGURES 5a to 5d** illustrate single-pass scanning methods for forming a series of equally spaced parallel tracks (hatches) on a working surface with different laser beam configurations (patterns) according to embodiments of the invention;
**FIGURE 6** illustrates a multi-pass scanning method for forming a series of equally spaced parallel tracks (hatches) on a working surface using the laser beam configuration shown in Figure 5b;
**FIGURES 7a to 7c** illustrate multi-directional scanning capabilities of the laser beam configurations shown in Figures 5a to 5d for forming a series of equally spaced parallel tracks (hatches) on a working surface;
**FIGURES 8a to 8c** illustrates a method of forming a series of equally spaced parallel tracks (hatches) on a working surface achievable using a subset of the total available laser beams;
**FIGURE 9** is a cross-sectional view of a laser bean scanner according to another embodiment of the invention;
**FIGURE 10** shows a laser beam pattern adjustment optic according to an embodiment of the invention;
**FIGURE 11** illustrates scanning strategies achievable with the laser beam pattern positioning optic shown in Figure 10; and
**FIGURE 12** is a cross-sectional view of a laser beam scanner according to another embodiment of the invention.

### Description of Embodiments

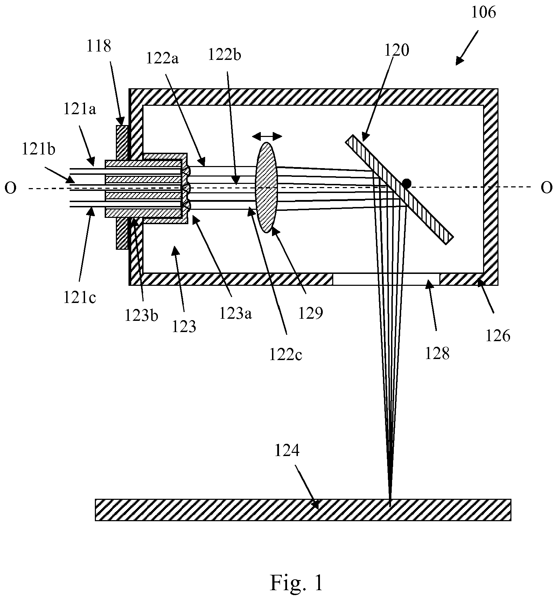

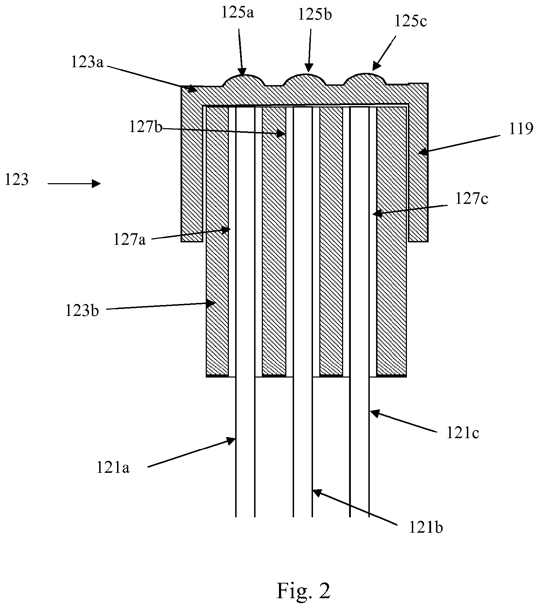

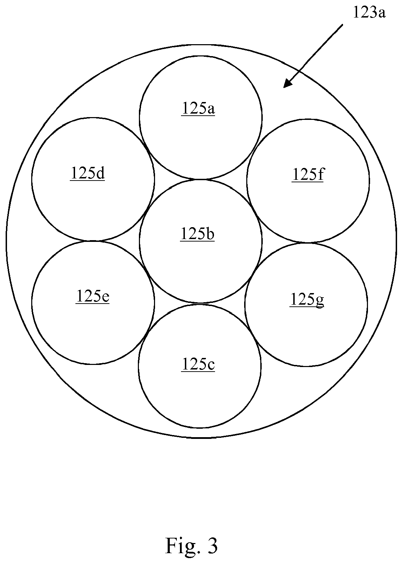

Referring to Figures 1 to 3, a laser beam scanner 106 according to an embodiment of the invention comprises a laser beams positioning optic 120, a plurality of optical fibres (in this embodiment seven optical fibres but only three 121a, 121b, 121c are shown) for delivering a plurality of laser beams 122a, 122b, 122c and a unitary fibre termination optic 123a aligned to direct the laser beams 122a, 122b, 122c from output ends of the optical fibres 121a, 121b, 121c to the laser beams positioning optic 120. The laser beams positioning optic 120 is movable relative to the fibre termination optic 123a to scan the laser beams 122a, 122b, 122c across a working surface 124.

In this embodiment, the laser beams positioning optic 120 comprises a pair of tiltable mirrors (only one of which is shown) mounted to rotate about orthogonal axis such that movement of the mirrors scans the laser beams 122a, 122b, 122c across the working surface 124 in two-dimensions. The tiltable mirrors are driven by galvanometers (not shown) in response to drive signals from a controller. In a further embodiment, a further tiltable mirror is provided having a faster dynamic response than the galvanometer driven mirrors to increase a capability for rapid changes in direction in the two scanning directions. Such an arrangement of mirrors having different dynamic response is disclosed in more detail in WO2016/156824.

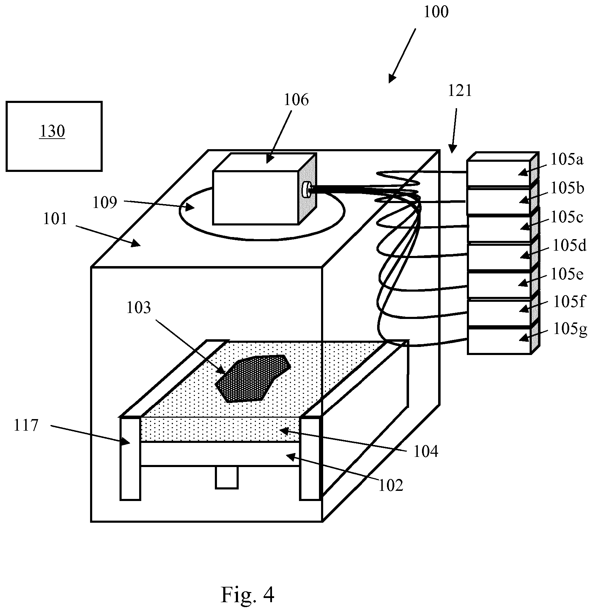

A dynamic focussing optic 129 is provided for maintaining a focus of the laser beams in the plane of the working surface 124 as the beams are steered across the working surface by the tiltable mirrors. In an alternative embodiment, the dynamic focussing optic may be replaced with an f-θ lens at an aperture 128 in housing 126 or in a chamber window (such as window 109 shown in Figure 4) through which the laser beams are directed by the scanner 106.

The fibre termination optic 123a comprises a contoured surface, distal from the ends of the optical fibres, forming a plurality of lenses 125a to 125g for collimating each diverging laser beam after the laser beam leaves the output end of the corresponding optical fibre. The surface of the fibre termination optic proximal to the ends of the optical fibres is fused to optical fibres to minimise loss at the interface between the optical fibres and the termination optic 123a. Fusing of the optical fibres to the termination optic may be achieved by any suitable means, including transmitting laser beams through the optical fibres to melt material at a contact interface between the optical fibres and the termination optic 123a.

The termination optic 123a is connected to an optical fibre holder 123b to form a multi-laser delivery optic or end cap 123 for the output ends of the plurality of optical fibres. In this embodiment, the termination optic 123a comprises a female sleeve portion 119 for receiving the cylindrical male holder 123b to connect the termination optic 123a to the holder 123b. The holder 123b is an interference fit within the sleeve 126.

The optical fibre holder 123b comprises a channel 127a, 127b, 127c for each optical fibre 121a, 121b, 121c. Insertion of an optical fibre into each channel 127a, 127b, 127c aligns an output end of the optical fibre with a corresponding lens 125a to 125g on the termination optic 123a. Once aligned using the holder 123b, the optical ends can be fused to the termination optic 123a.

In another embodiment, the termination optic 123a is formed as a single-piece together with the holder 123b.

The holder 123b and the termination optic 123a are formed using a laser inscribing and chemical etching process, for example the process described in PCT/GB2018/050195.

The end cap 123 is mounted to the housing 126 of the laser scanner 106 by a flexure 118 that allows adjustment of a position of the end cap 123 relative to the positioning and focussing optics 120 and 129. In this way, the collimated laser beams output from the end cap 123 can be aligned together with the optic axis O-O of the optical channel provided by the laser scanner 106.

The laser scanner can be used in an additive manufacturing apparatus 100. Figure 4 shows the laser scanner 106 as part of a powder bed additive manufacturing apparatus 100. A plurality of lasers 105a to 105g are connected to the optical scanner 106 via optical fibres (designated generally as 121). The additive manufacturing apparatus comprises a build chamber 101 having an optical window 109 therein, wherein the laser scanner 106 is mounted to deliver the laser beams to a powder bed 104 in the build chamber 101 through the optical window 109. The powder bed 104 is supported by a build platform 102 lowerable within a build sleeve 117. As the build platform 102 is lowered, powder layers are formed across the powder bed 104 using a wiper and dispensing mechanism (now shown). The laser scanner 106 scans the laser beams across each powder layer to solidify the powder material to form the object 103. Operation of the laser scanner 106 and lasers 105a to 105g is under the control of a controller 130. The controller 130 may control the laser scanner 106 and lasers 105a to 105g to carry out scanning strategies as described hereinafter.

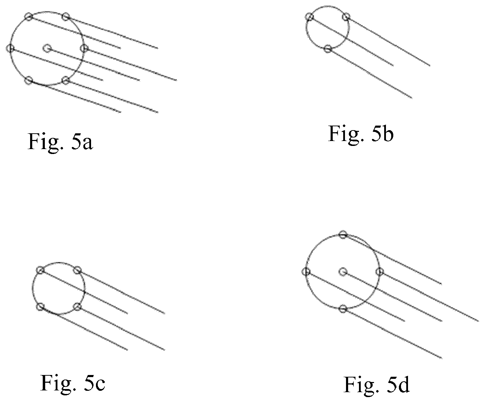

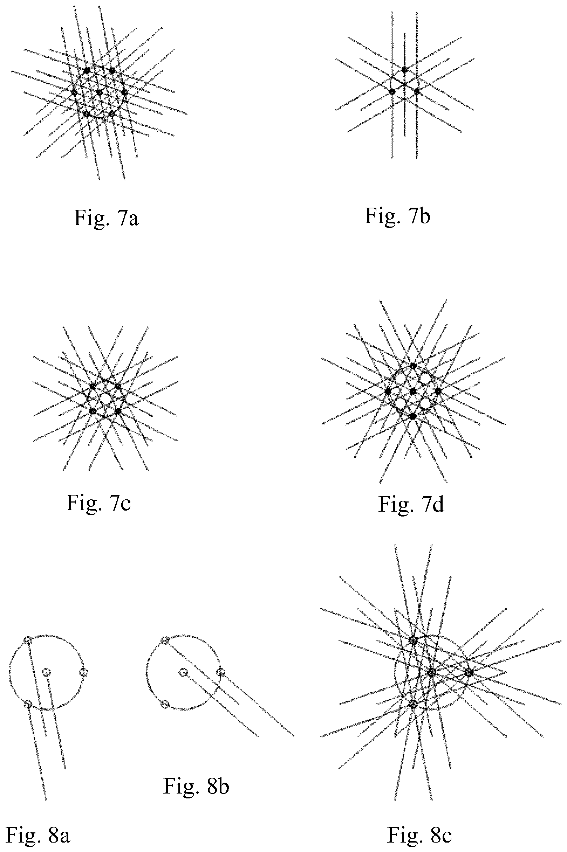

Referring to Figure 5a, the laser scanner may scan the seven laser beams across each layer to simultaneously form a plurality of tracks (hatches) equally spaced across the powder layer. The rotational symmetry of the laser beam pattern means that simultaneous formation of equally spaced tracks can be achieved for several different scan directions, as shown in Figure 7a. Varying a scanning direction between layers can be advantageous in minimising directional properties in the eventual object that is manufactured. Figure 7a shows 6 possible scanning directions for the configuration of seven lasers. However, other requirements may constrain the selection of the scanning direction to a subset of these possible scanning directions, for example if the scanning is to be in a direction opposed to a gas flow across the powder bed, as disclosed in WO2014/125280 and WO2014/125258.

Figures 5b to 5d and 7b to 7d show tracks formed using configurations (patterns) of laser beam spots on the surface of the powder bed with a laser scanner delivering between three and five lasers beams. Configuration 5b, like configuration 5a, provides six possible hatching directions with equally spaced tracks at 60° intervals, whereas configurations 5c and 5d provide eight possible hatching directions with equally spaced tracks at 45° intervals. For each configuration, each laser spot in the pattern is at a different offset in the scanning direction (along the length of the track). This offset can be accounted for to ensure that each track has the correct start and end points through control of the laser firing sequence. This may result in not all the lasers 105a to 105g being fired at the start and the end of a scan of the laser pattern along a scan line across the powder bed 104.

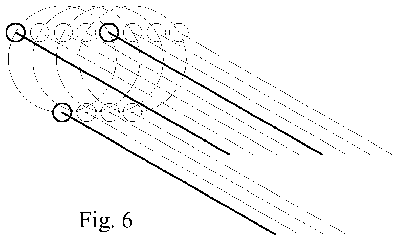

Should the spacing between the simultaneously formed tracks be wider than that required to form continuously solidified material between adjacent tracks, the gaps of unsolidified material can be later solidified by one or more further passes of the pattern of laser beams along one or more scan lines having a small offset (less than a width of the laser pattern perpendicular to the scan direction) from each other. Figure 6 shows such a scan strategy for the laser configuration shown in Figure 5b, wherein four passes of the laser beam pattern give a laser track pitch ¼ of the laser track width provided by a single pass of the laser pattern such that material is continuously solidified between the first three tracks formed on the first pass (shown in bold lines). The number of passes will be different for different patterns of the laser beams and potentially, for different scan parameters, such as laser power, scan speed, (or for a point scanning regime as used in Renishaw's RenAM 500M) exposure time and/or point distance. Each successive pass may be in an opposed direction.

The scanning strategies described above are predicated on firing all lasers during a pass of the laser beam pattern over an area of the powder bed to be solidified. This provides an efficient use of the laser resources. However, a wider possible set of scanning directions is possible if the requirement to use all lasers during a scan is relaxed. An example is shown in Figures 8a to 8c. In this example, the laser spot pattern of Figure 5c is used. The tracks made in Figure 8a are uniformly spaced, but if all four lasers are fired, there would be a greater gap between the tracks formed by the laser spot in the centre and the laser spot on the righthand side than that between the adjacent tracks formed by the other laser spots. Accordingly, to keep the track spacing equal, the laser for the righthand spot is not fired when scanning in a direction shown in in Figure 8a. However, for a different scanning direction, such as that shown in Figure 8b, the laser for the righthand laser spot is fired, whereas a different one of the lasers is not fired in order to form tracks of equal spacing. By selecting which laser not to fire for each scanning direction, equally spaced tracks can be formed for a greater variety of scanning directions, as shown in Figure 8c.

In a further embodiment, different types of lasers may be used for ones of the laser spots. This may be advantageous if the laser scanner 106 is to be used for different purposes during the build, for example for preheating, sintering, melting, laser peening, laser ablation or in-process monitoring. Furthermore, the laser pattern may be moved in a direction such that one laser spot may be used for preheating of the powder material and another of the laser spots used for the solidification of the material. For this purpose, the laser pattern may be scanned in a direction such that the tracks of two laser spots are along the same line (or at least overlap) but with one laser spot following the other along that line. Such a scanning strategy may be achievable with the laser spot configuration shown in Figure 5c with simultaneously utilisation of all the laser beams and for the laser spot configurations shown in Figures 5a, 5b and 5d with one of the lasers not being fired. A laser used for preheating may be operated at a lower power than a laser used for solidification. In a further embodiment, the preheating of the powder may be sufficient to sinter the powder, the sintered powder later melted with another of the laser spots on a single pass of the laser beam spot pattern. For different scanning directions, different laser beam spots may be used for preheating/sintering and solidification of the powder.

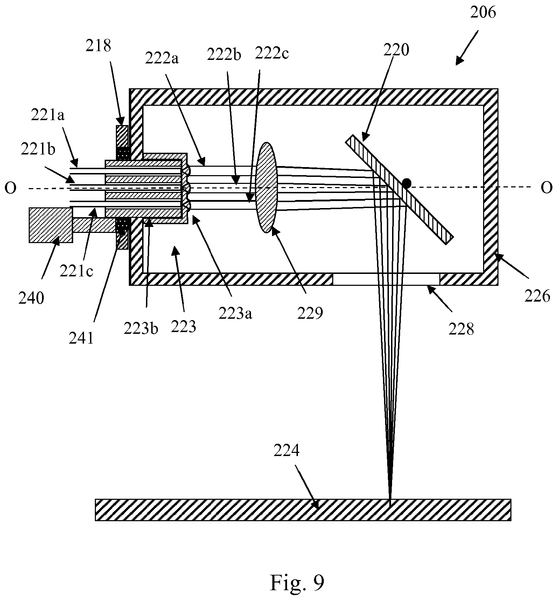

A further embodiment of a laser scanner 206 according to the invention is shown in Figure 9. Features of this embodiment corresponding to features described above with reference to Figures 1 to 3 have been given the same reference numerals but in the series 200. Features of this embodiment that are the same or similar to features of the above described embodiment will not be described again and reference is made to the above description for these features. This embodiment differs from the embodiment shown in Figure 1 in that the end cap 223 is mounted for rotation about the optical axis O-O. To this end, bearings 241 are provided to allow for rotation of the end cap 223 in the flexure 225 and a drive mechanism 240 is provided for driving rotation of the end cap 223. The end cap 223 may be rotatable (for example, through a set of angles between 0° and 60° for the laser beam patterns shown in Figueres 5a and 5b and through a set of angles between 0° and 45° for the laser beam patterns shown in Figueres 5c and 5d) to increase the number of scanning directions in which equally spaced tracks can be simultaneously formed using a rotationally symmetric pattern of laser beams.

Alternatively, a non-rotationally symmetric pattern of laser beams may be provided by the end cap 223 and the end cap 223 is rotated to align the laser pattern with a scanning direction for each layer. In this alternative embodiment, the end cap 223 may be rotatable through a set of angles between 0° and 360°. Rotation of the end cap 223 may only be necessary at the start/end of a layer as, once the end cap is aligned with a scanning direction for that layer, all tracks may be formed using that orientation of the end cap 223.

The laser scanner may be used for continuous scanning in which the pattern of laser spots is moved across the working surface 124, 224 with the lasers switched on or may be used for point scanning, wherein the laser beam pattern is held at a location on the working surface for an exposure time and then moved to a new exposure point. During the movement (or "hop") to the new location the laser beams may be switched-off. In this way a series of discreet points are exposed rather than a continuous line, although the solidified regions formed by the exposure of discreet points may form a line of continuously solidified material. A laser beam scanner having a triangular tiled pattern of laser beams, as shown in Figures 5a and 5b, may be used for a scanning strategy in which the discreet exposure points are distributed in a triangular pattern, as described in WO2016/079496. Exposure of points in a triangular pattern may be used in a multi-layer consolidation strategy in which spaced apart "columns" of material extending across multiple layers are consolidated through exposure of a single layer and unconsolidated material between these columns is consolidated through exposure of later layers, for example as disclosed in unpublished application GB 1803510.5, which is incorporated herein by reference.

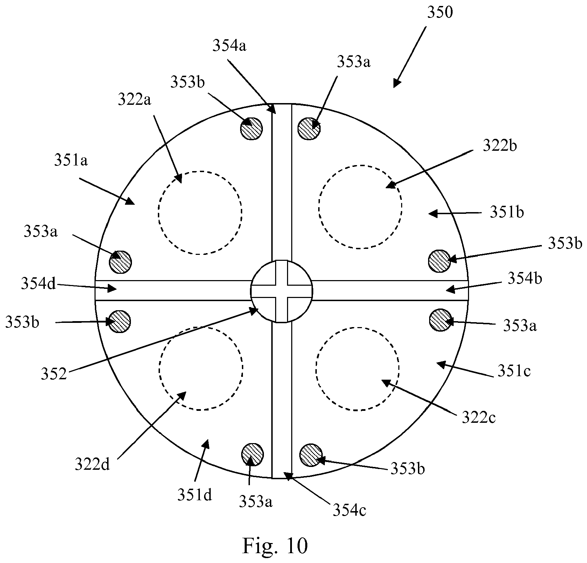

Referring to Figure 10, in a further embodiment, the relative position of the laser spots on the working surface can be dynamically changed by the laser scanner using laser beam pattern adjustment optic 350 provided in the optical path of the laser beams. The optic 350 comprises a plurality of individually displaceable portions, in this embodiment in the form of four mirror quadrants 351a to 351d. Each mirror quadrant 351a to 351d is pivotably about a central pivot 352 comprising a torsion spring for each mirror quadrant 351a to 351, which biases the mirror quadrant 351a, 351b, 351c, 351d against displacement driven by actuators 353a, 353b. In this embodiment, each mirror quadrant 351a to 351d comprises two actuators 353a, 353b, one at each outer corner of the quadrant 351a to 351d. The actuators 353a, 353b are in the form of piezoelectric stacks that can produce small displacements of the mirror quadrants at high drive frequencies (typically of around 1mm or less at the working surface compared to hundreds of millimetres of displacement achievable with the main beam positioning optics 120, 220). Between each pair of mirror quadrants 351a to 351d is a flexible film 354a to 345d for allowing small relative displacements between the mirror quadrants 351a to 351d. The laser beam pattern adjustment optic 350 is located within the laser scanner such that a different one of the laser beams 322a to 322d delivered along the optical channel impinges on a different one of the mirror quadrants 351a to 351d. The laser beam pattern adjustment optic 350 may be located between the termination optic and the galvanometer driven tiltable mirrors for steering of the laser beams pattern across the working surface. The laser beam pattern adjustment optic 350 may be at a location along the optical axis where the laser beams are collimated, for example between the termination optic 123a and the focussing optic 129.

In this embodiment, a laser beam pattern adjustment optic 350 with four quadrant mirrors is described for steering a pattern consisting of four laser beams. However, it will be understood that a different number of mirror portions may be required for a laser beam pattern comprising a different number of laser beams. In such embodiments, each mirror portion may not be quadrant shaped but may have a shape that is a different circular sector, such as a 120° sector, sextant or octant.

The beam pattern adjustment optic 350 may be used for several purposes during scanning of the overall laser beam pattern with the positioning optic 120, 220.

It may be desirable to alter the relative positions of the laser beam spots to obtain the desired spacing between tracks when scanning in a particular scanning direction. The ability to alter the relative positions of the laser beam spots in the pattern may increase the number of scanning directions available for forming tracks with a set spacing.

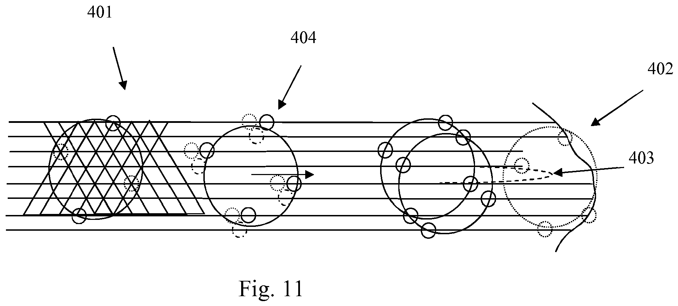

Furthermore, it may be desirable to dynamically change the relative positions of the laser beams in the pattern to achieve a desired distribution of exposure points that would not be achievable by stepping a fixed pattern of the laser beams across the working surface. For example, at 401 in Figure 11a pattern of four laser beams are scanned along tracks to achieve a triangular pattern of exposure points. To achieve this, the laser spots are slightly displaced using the laser beam pattern positioning optic 350 from the square array of spots shown in Figure 5c, with certain ones of the laser spots being held at a point on the working surface whilst other ones of the spots are hopped between adjacent spot along the corresponding track. The holding of the spot at a point on the working surface and subsequent hopping to the adjacent point may be achieved using the technique described in WO2016/156824, which is incorporated herein by reference, in particular, with reference to Figures 4a and 4b of WO2016/156824. In Figure 11, the spots in dotted lines are shown in a position displaced from the "neutral" (unbiased) position on the circumference of the circle. The two triangles included in Figure 11 are to illustrate that when some spots of the pattern in the neutral position coincide with a point exposure on the surface for a triangular pattern of point exposures other ones of the laser spots, when in the "neutral" position, will be spaced from an exposure point hence the need for a small displacement of the laser spot from the "neutral" position through actuation of the corresponding mirror quadrant. In this way, point exposure patterns are achievable on the working surface that are not multiples of the image of the laser beams provided by the end cap 123, 223.

Individual control of the position of the laser beam spots may allow the laser spots to be hopped at different times onto an adjacent track to be scanned on a further pass of the laser beam pattern over the working surface as shown at 402 in Figure 11. This may allow the laser beam pattern to be turned around at the edge of an area to be solidified whilst material continues to be solidified (as opposed to Skywriting wherein the lasers beam is switched off during a turn to avoid defects that can result from melting during deceleration and acceleration of the galvanometer steering mirrors). Each laser beam can be hopped to the next exposure point at the required time using the faster dynamic response of mirror 350 even if the "neutral" position of the laser spot has yet to reach that exposure point. As shown in Figure 11, due to the offset nature of the laser beam spots in the pattern, "early" turning of the laser beam pattern at the edge of the area (indicated by dotted line 403) to minimise non-firing times of the laser beams may result in some tracks not extending to the edge of the area to be solidified as the edge of the area is not within the range of the corresponding laser beam. These unsolidified areas may be later filled in when carrying out a border scan of the area.

In a further scanning strategy shown at 404, the pattern is located such that the "neutral" position for the laser spots falls between tracks of exposure points and the laser beam pattern adjustment optic 350 is used to hop the laser spots between exposure points on adjacent tracks (as shown by the dashed, dashed and dotted and solid line spots) as the pattern is progressed in a scanning direction. In this way, adjacent tracks of exposure points may be solidified in a single pass of the laser beam pattern.

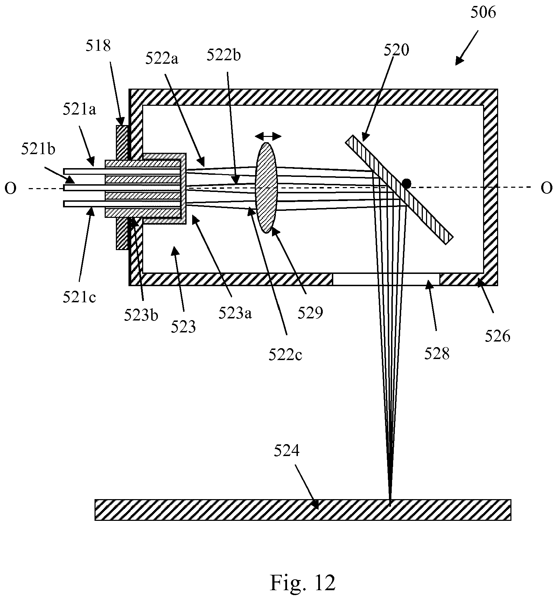

Figure 12, shows another embodiment of a laser scanner according to an embodiment of the invention. Features of this embodiment corresponding to features described above with reference to Figures 1 to 3 have been given the same reference numerals but in the series 500. Features of this embodiment that are the same or similar to features of the above described embodiment will not be described again and reference is made to the above description for these features. This embodiment differs from the embodiment shown in Figure 1 in that the termination optic 523a presents to each optical fibre 521a, 521b, 521c planar proximal and distal faces transverse (perpendicular) to a propagation direction of the laser beam delivered through the optical fibre 521a, 521b, 521c. Accordingly, the laser beams 522a, 522b, 522c from the optical fibres 521a, 521b, 521c are not collimated at the termination optic 523a but continue to diverge until reaching the focussing optic 520.

An alternative method for forming the end cap comprises stripping the outer coating off ends of a set of optical fibres and then bundling the bare glass fibre ends into a required pattern, such as those described above with reference to Figures 5a to 5d, using a jig to form a fibre array. In the case of a fibre array of seven optical fibres, the optical fibres can be stacked in a hexagonal pattern, whereas for the other patterns, appropriate spacers are provided. The fibre array is fed into a glass capillary having an appropriate inner diameter. An inner diameter of the glass capillary may taper outwardly at an insertion end to facilitate insertion of the optical fibre ends into the glass capillary. Heat is then applied, for example using a CO₂ laser or H₂ flame, to the glass capillary to shrink the capillary around the array of fibre ends. An end of the capillary and array of fibre ends is then cleaved or otherwise cut to provide a planar end face of optical fibres and capillary, which is fused to a termination optic, such as described above, using, for example, an electric arc, CO₂ laser or H₂ flame. The planar end face may be polished before being fused to the termination optic.

In a further embodiment, a multi-core fibre is formed having the required pattern of optical fibre cores and this multi-core fibre is fused to a termination optic. Lasers can be fed to the multi-core optical fibre by using free-space optics, although this may be expensive and require careful alignment during production, or spliced to a fan-out optic, which splits the multi-core fibre into individual optical fibres. The fan out optic may be manufactured by forming an appropriate end cap for the delivery end of the multi-core fibre. The end cap may be similar to the end cap described with respect to Figure 12, with the multi-core fibre fused to an opposite side of a central termination optic such that the laser beams pass from the individual optical fibres into the multi-core fibre via the central termination optic. Alignment of the individual optical fibres with the multicore fibre may be achieved through the formation of appropriately positioned channels either side of the termination optic. The end cap may be formed using laser inscribing and chemical etching or through the above described method of shrinking a glass capillary tube around the fibres.

It will be understood that alterations and modifications to the above described embodiments can be made without departing from the scope of the invention as defined in the appended claims. For example, use of the laser scanner is not limited to additive manufacturing apparatus but the laser scanner may be used with other apparatus, such as laser marking apparatus.

## Claims

1. A laser beam scanner (106; 206; 506) comprising a laser beams positioning optic (120; 220; 520) and a plurality of optical fibres (121a, 121b, 121c; 221a, 221b, 221c; 521a, 521b, 521c) for delivering a plurality of laser beams (122a, 122b, 122c; 222a, 222b, 222c; 522a, 522b, 522c), **characterised in that** the laser beam scanner (106, 206; 506) further comprises a fibre termination optic (123a, 223a; 523a), wherein output ends of the optical fibres (121a, 121b, 121c; 221a, 221b, 221c; 521a, 521b, 521c) are joined to the fibre termination optic (123a, 223a; 523a) and the fibre termination optic is aligned to direct the laser beams (122a, 122b, 122c; 222a, 222b, 522c; 522a, 522b) from the output ends of the plurality of optical fibres (121a, 121b, 121c; 221a, 221b, 221c; 521a, 521b, 521c) to the laser beams positioning optic (120; 220; 520), the laser beams positioning optic (120; 220; 520) movable relative to the fibre termination optic (123a; 223a; 523a) to scan the laser beams (122a, 122b, 122c; 222a, 222b, 222c; 522a, 522b, 522c) across a working surface (124; 224; 524),.

2. A laser beam scanner (506) according to claim 1, wherein the termination optic (523a) presents to each optical fibre (521a, 521b, 521c) planar proximal and distal faces transverse to a propagation direction of the laser beam delivered through the optical fibre (521a, 521b, 521c).

3. A laser beam scanner (106; 206) according to claim 1, wherein the fibre termination optic (123a, 223a) comprises a contoured surface forming a plurality of lenses (125a, 125b, 125c, 125d, 125e, 125f, 125g) for collimating and/or focussing each laser beam (122a, 122b, 122c; 222a, 222b).

4. A laser beam scanner (106; 206; 506) according to any one of claims 1 to 3, wherein the fibre termination optic (123a, 223a; 523a) forms an end cap (123, 223, 523) for the output ends of the plurality of optical fibres (121a, 121b, 121c; 221a, 221b, 221c; 521a, 521b, 521c).

5. A laser beam scanner (106; 206; 506) according to claim 4, wherein the fibre termination optic (123a, 223a; 523a) is connected to an optical fibre holder (123b, 223b, 523b) to form the end cap (123, 223, 523) for the output ends of the plurality of optical fibres (121a, 121b, 121c; 221a, 221b, 221c; 521a, 521b, 521c).

6. A laser beam scanner (106; 206; 506) according to claim 1, wherein the fibre termination optic (123a, 223a, 523a) is connected to a holder (123b, 223b, 523b) for holding the output ends of the plurality of optical fibres (121a, 121b, 121c; 221a, 221b, 221c; 521a, 521b, 521c), the holder (123b, 223b, 523b) comprising a plurality of channels (127a, 127b, 127c; 227a, 227b, 227c; 527a, 527b, 527c) for receiving and aligning the output ends of the plurality of optical fibres (121a, 121b, 121c; 221a, 221b, 221c; 521a, 521b, 521c) with the fibre termination optic (123a, 223a; 523a).

7. A laser beam scanner (106; 206; 506) according to claim 6, wherein the fibre termination optic (123a, 223a) comprises a contoured surface forming a plurality of lenses (125a, 125b, 125c, 125d, 125e, 125f, 125g) for collimating and/or focussing each laser beam (122a, 122b, 122c; 222a, 222b) and the fibre termination optic (123a, 223a) is connected to the holder such that insertion of the optical fibres (121a, 121b, 121c; 221a, 221b, 221c; 521a, 521b, 521c) into the channels (127a, 127b, 127c; 227a, 227b, 227c) aligns the output end of each optical fibre (121a, 121b, 121c; 221a, 221b, 221c; 521a, 521b, 521c) with a corresponding one of the lenses (125a, 125b, 125c, 125d, 125e, 125f, 125g) of the contoured surface.

8. A laser beam scanner (106; 206; 506) according to any one of claims 5 to 7, wherein the fibre termination optic and the holder are formed from a unitary substrate.

9. A laser beam scanner (106; 206; 506) according to any one of claims 5 to 7, wherein the fibre termination optic (123a, 223a, 523a) and the holder (123b, 223b, 523b) are separate parts comprising locating formations that relatively locate the two parts when connected together.

10. A laser beam scanner (106; 206; 506) according to any one of claims 5 to 9, wherein the holder (123b, 223b, 523b) and/or fibre termination optic (123a, 223a, 523a) are formed using a laser inscribing and chemical etching process.

11. A laser beam scanner (106; 206; 506) according to any one of the preceding claims, wherein the output ends of the optical fibres (121a, 121b, 121c; 221a, 221b, 221c; 521a, 521b, 521c) are welded or fused to the fibre termination optic (123a, 223a, 523a).

12. A laser beam scanner (106; 206; 506) according to any one of the preceding claims, wherein the laser beams positioning optic (120; 220; 520) comprises at least one tiltable mirror for directing the laser beams to different locations on the working surface, and may comprise two tiltable mirrors tiltable about orthogonal axes or two tiltable mirrors tiltable about non-orthogonal axes.

13. A laser beam scanner (106) according to claim 12 when dependent through to claim 4, comprising a dynamic focussing optic (129) for maintaining a focus of the laser beams in a plane of a working surface (124) as the beams are steered across the working surface (124) by the tiltable mirrors, wherein the end cap (123) is mounted to a housing (126) of the laser scanner (106) by a flexure (118) that allows adjustment of a position of the end cap (123) relative to the laser beams positioning optic (120) and the dynamic focussing optics (129).

14. A laser beam scanner (106; 206; 506) according to any one of the preceding claims, comprising a laser beam adjustment optic (350) for dynamically adjusting relative positions of the laser beams (122a, 122b, 122c; 222a, 222b, 222c; 522a, 522b, 522c) on the working surface (124; 224; 524), wherein the laser beam adjustment optic (350) may comprise a plurality of individually displaceable portions (351a, 35b, 351c, 351d), for example mirror portions, each displaceable portion (351a, 35b, 351c, 35 1d) arranged for steering one or a subset of the laser beams (122a, 122b, 122c; 222a, 222b, 222c; 522a, 522b, 522c).

15. A laser beam scanner (106; 206; 506) according any one of the preceding claims, wherein the output ends of the optical fibres (121a, 121b, 121c; 221a, 221b, 221c; 521a, 521b, 521c) are arranged in a rotationally symmetric pattern about an optical axis of the laser beam scanner (106; 206; 506), such as a triangular, hexagonal or square pattern.

16. A laser beam scanner (106; 206; 506) according to any one of the preceding claims, wherein the fibre termination optic and output ends of the optical fibres (121a, 121b, 121c; 221a, 221b, 221c; 521a, 521b, 521c) are rotatable about an optical axis of the laser beam scanner (106; 206; 506).

17. A laser beam scanner (106; 206; 506) according to any one of the preceding claims, wherein the laser beam scanner (106; 206; 506) comprises a controller for controlling movement of the laser beams positioning optic (120; 220; 520), the controller arranged to control the laser beams positioning optic (120; 220; 520) to scan the laser beams (122a, 122b, 122c; 222a, 222b, 222c; 522a, 522b, 522c) across the working surface (124; 224; 524) to form a set of first tracks with a first pass of the laser beams (122a, 122b, 122c; 222a, 222b, 222c; 522a, 522b, 522c) along the working surface (124; 224; 524) and a set of second tracks with a second pass of the laser beams (122a, 122b, 122c; 222a, 222b, 222c; 522a, 522b, 522c) along the working surface (124; 224; 524), wherein ones of the second tracks are interspersed between ones of the first tracks.

18. An additive manufacturing apparatus comprising a laser beam scanner (106; 206; 506) according to any one of claims 1 to 17.

19. An additive manufacturing apparatus according to claim 18, comprising a controller for controlling the laser beam scanner (106; 206; 506) to scan the laser beams (122a, 122b, 122c; 222a, 222b, 222c; 522a, 522b, 522c) along tracks that extend in different scanning directions for successive layers, the controller further arranged to control lasers that generate the laser beams (122a, 122b, 122c; 222a, 222b, 222c; 522a, 522b, 522c) such that different sub-sets of the laser beams (122a, 122b, 122c; 222a, 222b, 222c; 522a, 522b, 522c) are used to form the tracks extending in different scanning directions.

## Patentansprüche

1. Laserstrahlabtasteinrichtung (106; 206; 506) mit einer Laserstrahlpositionierungsoptik (120; 220; 520) und einer Vielzahl von optischen Fasern (121a, 121b, 121c; 221a, 221b, 221c; 521a, 521b, 521c) zur Abgabe einer Vielzahl von Laserstrahlen (122a, 122b, 122c; 222a, 222b, 222c; 522a, 522b, 522c), **dadurch gekennzeichnet, dass** die Laserstrahlabtasteinrichtung (106, 206; 506) ferner eine Faserabschlussoptik (123a, 223a; 523a) umfasst, wobei Ausgangsenden der optischen Fasern (121a, 121b, 121c; 221a, 221b, 221c; 521a, 521b, 521c) mit der Faserabschlussoptik (123a, 223a; 523a) verbunden sind und die Faserabschlussoptik so ausgerichtet ist, dass sie die Laserstrahlen (122a, 122b, 122c; 222a, 222b, 522c; 522a, 522b) von den Ausgangsenden der Vielzahl von optischen Fasern (121a, 121b, 121c; 221a, 221b, 221c; 521a, 521b, 521c) zur Laserstrahlpositionierungsoptik (120; 220; 520) lenkt, wobei die Laserstrahlpositionierungsoptik (120; 220; 520) relativ zur Faserabschlussoptik (123a; 223a; 523a) beweglich ist, um die Laserstrahlen (122a, 122b, 122c; 222a, 222b, 222c; 522a, 522b, 522c) über eine Arbeitsfläche (124; 224; 524) abzutasten.

2. Laserstrahlabtasteinrichtung (506) nach Anspruch 1, wobei die Abschlussoptik (523a) jeder optischen Faser (521a, 521b, 521c) ebene proximale und distale Flächen quer zu einer Ausbreitungsrichtung des durch die optische Faser (521a, 521b, 521c) gelieferten Laserstrahls präsentiert.

3. Laserstrahlabtasteinrichtung (106; 206) nach Anspruch 1, wobei die Faserabschlussoptik (123a, 223a) eine konturierte Oberfläche umfasst, die eine Vielzahl von Linsen (125a, 125b, 125c, 125d, 125e, 125f, 125g) zum Kollimieren und/oder Fokussieren jedes Laserstrahls (122a, 122b, 122c; 222a, 222b) bildet.

4. Laserstrahlabtasteinrichtung (106; 206; 506) nach einem der Ansprüche 1 bis 3, wobei die Faserabschlussoptik (123a, 223a; 523a) eine Endkappe (123, 223, 523) für die Ausgangsenden der Vielzahl von optischen Fasern (121a, 121b, 121c; 221a, 221b, 221c; 521a, 521b, 521c) bildet.

5. Laserstrahlabtasteinrichtung (106; 206; 506) nach Anspruch 4, wobei die Faserabschlussoptik (123a, 223a; 523a) mit einem Halter (123b, 223b, 523b) für optische Fasern verbunden ist, um die Endkappe (123, 223, 523) für die Ausgangsenden der Vielzahl von optischen Fasern (121a, 121b, 121c; 221a, 221b, 221c; 521a, 521b, 521c) zu bilden.

6. Laserstrahlabtasteinrichtung (106; 206; 506) nach Anspruch 1, wobei die Faserabschlussoptik (123a, 223a, 523a) mit einem Halter (123b, 223b, 523b) zum Halten der Ausgangsenden der Vielzahl von optischen Fasern (121a, 121b, 121c; 221a, 221b, 221c; 521a, 521b, 521c) verbunden ist), wobei der Halter (123b, 223b, 523b) eine Vielzahl von Kanälen (127a, 127b, 127c; 227a, 227b, 227c; 527a, 527b, 527c) zum Aufnehmen und Ausrichten der Ausgangsenden der Vielzahl von optischen Fasern (121a, 121b, 121c; 221a, 221b, 221c; 521a, 521b, 521c) mit der Faserabschlussoptik (123a, 223a; 523a) umfasst.

7. Laserstrahlabtasteinrichtung (106; 206; 506) nach Anspruch 6, wobei die Faserabschlussoptik (123a, 223a) eine konturierte Oberfläche umfasst, die eine Vielzahl von Linsen (125a, 125b, 125c, 125d, 125e, 125f, 125g) zum Kollimieren und/oder Fokussieren jedes Laserstrahls (122a, 122b, 122c; 222a, 222b) bildet, und die Faserabschlussoptik (123a, 223a) mit dem Halter derart verbunden ist, dass ein Einführen der optischen Fasern (121a, 121b, 121c; 221a, 221b, 221c; 521a, 521b, 521c) in die Kanäle (127a, 127b, 127c; 227a, 227b, 227c) das Ausgangsende jeder optischen Faser (121a, 121b, 121c; 221a, 221b, 221c; 521a, 521b, 521c) mit einer entsprechenden der Linsen (125a, 125b, 125c, 125d, 125e, 125f, 125g) der konturierten Oberfläche ausrichtet.

8. Laserstrahlabtasteinrichtung (106; 206; 506) nach einem der Ansprüche 5 bis 7, wobei die Faserabschlussoptik und der Halter aus einem einheitlichen Substrat gebildet sind.

9. Laserstrahlabtasteinrichtung (106; 206; 506) nach einem der Ansprüche 5 bis 7, wobei die Faserabschlussoptik (123a, 223a, 523a) und der Halter (123b, 223b, 523b) separate Teile sind, die Anordnungsstrukturen aufweisen, die die beiden Teile relativ zueinander anordnen, wenn sie miteinander verbunden sind.

10. Laserstrahlabtasteinrichtung (106; 206; 506) nach einem der Ansprüche 5 bis 9, wobei der Halter (123b, 223b, 523b) und/oder die Faserabschlussoptik (123a, 223a, 523a) unter Verwendung eines Verfahrens mit Lasergravieren und chemischem Ätzen gebildet werden.

11. Laserstrahlabtasteinrichtung (106; 206; 506) nach einem der vorhergehenden Ansprüche, wobei die Ausgangsenden der optischen Fasern (121a, 121b, 121c; 221a, 221b, 221c; 521a, 521b, 521c) mit der Faserabschlussoptik (123a, 223a, 523a) verschweißt oder verschmolzen sind.

12. Laserstrahlabtasteinrichtung (106; 206; 506) nach einem der vorhergehenden Ansprüche, wobei die Laserstrahlpositionierungsoptik (120; 220; 520) mindestens einen kippbaren Spiegel umfasst, um die Laserstrahlen auf verschiedene Stellen auf der Arbeitsfläche zu richten, und zwei kippbare Spiegel, die um orthogonale Achsen kippbar sind, oder zwei kippbare Spiegel umfassen kann, die um nicht orthogonale Achsen kippbar sind.

13. Laserstrahlabtasteinrichtung (106) nach Anspruch 12, wenn abhängig bis zu Anspruch 4, mit einer Optik (129) zur dynamischen Fokussierung zum Aufrechterhalten eines Fokus der Laserstrahlen in einer Ebene einer Arbeitsfläche (124), wenn die Strahlen durch die kippbaren Spiegel über die Arbeitsfläche (124) gelenkt werden, wobei die Endkappe (123) an einem Gehäuse (126) der Laserabtasteinrichtung (106) durch eine Flexur (118) befestigt ist, die eine Einstellung einer Position der Endkappe (123) relativ zu der Laserstrahlpositionieroptik (120) und der Optik (129) zur dynamischen Fokussierung ermöglicht.

14. Laserstrahlabtasteinrichtung (106; 206; 506) nach einem der vorhergehenden Ansprüche, mit einer Laserstrahleinstelloptik (350) zum dynamischen Einstellen von Relativpositionen der Laserstrahlen (122a, 122b, 122c; 222a, 222b, 222c; 522a, 522b, 522c) auf der Arbeitsfläche (124; 224; 524), wobei die Laserstrahleinstelloptik (350) eine Vielzahl von einzeln verlagerbaren Abschnitten (351a, 35b, 351c, 351d), beispielsweise Spiegelabschnitte, umfassen kann, wobei jeder verlagerbare Abschnitt (351a, 35b, 351c, 351d) zum Lenken eines oder einer Teilmenge der Laserstrahlen (122a, 122b, 122c; 222a, 222b, 222c; 522a, 522b, 522c) angeordnet ist.

15. Laserstrahlabtasteinrichtung (106, 206, 506) nach einem der vorhergehenden Ansprüche, wobei die Ausgangsenden der optischen Fasern (121a, 121b, 121c;, 221a, 221b, 221c;, 521a, 521b, 521c) in einem rotationssymmetrischen Muster um eine optische Achse der Laserstrahlabtasteinrichtung (106;, 206;, 506) angeordnet sind, wie z.B. einem dreieckigen, sechseckigen oder quadratischen Muster.

16. Laserstrahlabtasteinrichtung (106; 206; 506) nach einem der vorhergehenden Ansprüche, wobei die Faserabschlussoptik und die Ausgangsenden der optischen Fasern (121a, 121b, 121c; 221a, 221b, 221c; 521a, 521b, 521c) um eine optische Achse der Laserstrahlabtasteinrichtung (106; 206; 506) drehbar sind.

17. Laserstrahlabtasteinrichtung (106; 206; 506) nach einem der vorhergehenden Ansprüche, wobei die Laserstrahlabtasteinrichtung (106, 206, 506) ein Steuergerät zur Steuerung der Bewegung der Laserstrahlpositionierungsoptik (120; 220; 520) umfasst), wobei das Steuergerät so angeordnet ist, dass es die Laserstrahlpositionierungsoptik (120; 220; 520) steuert, um die Laserstrahlen (122a, 122b, 122c; 222a, 222b, 222c; 522a, 522b, 522c) über die Arbeitsfläche (124; 224; 524) abzutasten, um einen Satz von ersten Bahnen mit einem ersten Durchgang der Laserstrahlen (122a, 122b, 122c; 222a, 222b, 222c; 522a, 522b, 522c) entlang der Arbeitsfläche (124; 224; 524) und einen Satz von zweiten Bahnen mit einem zweiten Durchgang der Laserstrahlen (122a, 122b, 122c; 222a, 222b, 222c; 522a, 522b, 522c) entlang der Arbeitsfläche (124; 224; 524) zu bilden), wobei einige der zweiten Bahnen zwischen einige der ersten Bahnen eingefügt sind.

18. Vorrichtung zur additiven Fertigung mit einer Laserstrahlabtasteinrichtung (106; 206; 506) nach einem der Ansprüche 1 bis 17.

19. Vorrichtung zur additiven Fertigung nach Anspruch 18, mit einem Steuergerät zum Steuern der Laserstrahlabtasteinrichtung (106; 206, 506), um die Laserstrahlen (122a, 122b, 122c; 222a, 222b, 222c; 522a, 522b, 522c) entlang von Bahnen abzutasten, die sich in unterschiedlichen Abtastrichtungen für aufeinanderfolgende Schichten erstrecken, wobei das Steuergerät ferner so angeordnet ist, dass es Laser, die die Laserstrahlen (122a, 122b, 122c; 222a, 222b, 222c; 522a, 522b, 522c) erzeugen, so steuert, dass unterschiedliche Teilmengen der Laserstrahlen (122a, 122b, 122c; 222a, 222b, 222c; 522a, 522b, 522c) verwendet werden, um die sich in unterschiedlichen Abtastrichtungen erstreckenden Bahnen zu bilden.

## Revendications

1. Scanner à faisceau laser (106 ; 206 ; 506) comprenant une optique de positionnement de faisceaux laser (120 ; 220 ; 520), une pluralité de fibres optiques (121a, 121b, 121c ; 221a, 221b, 221c ; 521a, 521b, 521c) pour délivrer une pluralité de faisceaux laser (122a, 122b, 122c ; 222a, 222b, 222c ; 522a, 522b, 522c), **caractérisé en ce que** le scanner à faisceau laser (106, 206 ; 506) comprend en outre une optique de terminaison de fibre (123a, 223a ; 523a), dans lequel les extrémités de sortie des fibres optiques (121a, 121b, 121c ; 221a, 221b, 221c ; 521a, 521b, 521c) sont jointes à l'optique de terminaison de fibre (123a, 223a ; 523a) et l'optique de terminaison de fibre est alignée pour diriger les faisceaux laser (122a, 122b, 122c ; 222a, 222b, 522c ; 522a, 522b) depuis les extrémités de sortie de la pluralité de fibres optiques (121a, 121b, 121c ; 221a, 221b, 221c ; 521a, 521b, 521c) vers l'optique de positionnement de faisceaux laser (120 ; 220 ; 520), l'optique de positionnement de faisceaux laser (120 ; 220 ; 520) étant mobile par rapport à l'optique de terminaison de fibre (123a ; 223a ; 523a) pour balayer les faisceaux laser (122a, 122b, 122c ; 222a, 222b, 222c ; 522a, 522b, 522c) sur une surface de travail (124 ; 224 ; 524).

2. Scanner à faisceau laser (506) selon la revendication 1, dans lequel l'optique de terminaison (523a) présente à chaque fibre optique (521a, 521b, 521c) des faces planes proximale et distale transversales à une direction de propagation du faisceau laser délivré à travers la fibre optique (521a, 521b, 521c).

3. Scanner à faisceau laser (106 ; 206) selon la revendication 1, dans lequel l'optique de terminaison de fibre (123a, 223a) comprend une surface profilée formant une pluralité de lentilles (125a, 125b, 125c, 125d, 125e, 125f, 125g) pour collimater et/ou focaliser chaque faisceau laser (122a, 122b, 122c ; 222a, 222b).

4. Scanner à faisceau laser (106; 206; 506) selon l'une quelconque des revendications 1 à 3, dans lequel l'optique de terminaison de fibre (123a, 223a ; 523a) forme un couvercle d'extrémité (123, 223, 523) pour les extrémités de sortie de la pluralité de fibres optiques (121a, 121b, 121c ; 221a, 221b, 221c ; 521a, 521b, 521c).

5. Scanner à faisceau laser (106 ; 206 ; 506) selon la revendication 4, dans lequel l'optique de terminaison de fibre (123a, 223a ; 523a) est connectée à un support de fibre optique (123b, 223b, 523b) pour former le couvercle d'extrémité (123, 223, 523) pour les extrémités de sortie de la pluralité de fibres optiques (121a, 121b, 121c ; 221a, 221b, 221c ; 521a, 521b, 521c).

6. Scanner à faisceau laser (106 ; 206 ; 506) selon la revendication 1, dans lequel l'optique de terminaison de fibre (123a, 223a, 523a) est connectée à un support (123b, 223b, 523b) pour maintenir les extrémités de sortie de la pluralité de fibres optiques (121a, 121b, 121c ; 221a, 221b, 221c ; 521a, 521b, 521c), le support (123b, 223b, 523b) comprenant une pluralité de canaux (127a, 127b, 127c ; 227a, 227b, 227c ; 527a, 527b, 527c) pour recevoir et aligner les extrémités de sortie de la pluralité de fibres optiques (121a, 121b, 121c; 221a, 221b, 221c; 521a, 521b, 521c) avec l'optique de terminaison de fibre (123a, 223a, 523a).

7. Scanner à faisceau laser (106 ; 206 ; 506) selon la revendication 6, dans lequel l'optique de terminaison de fibre (123a, 223a) comprend une surface profilée formant une pluralité de lentilles (125a, 125b, 125c, 125d, 125e, 125f, 125g) pour collimater et/ou focaliser chaque faisceau laser (122a, 122b, 122c ; 222a, 222b) et l'optique de terminaison de fibre (123a, 223a) est connectée au support de sorte que l'insertion des fibres optiques (121a, 121b, 121c ; 221a, 221b, 221c ; 521a, 521b, 521c) dans les canaux (127a, 127b, 127c ; 227a, 227b, 227c) aligne les extrémités de sortie de chaque fibre optique (121a, 121b, 121c ; 221a, 221b, 221c ; 521a, 521b, 521c) avec une lentille correspondante parmi les lentilles (125a, 125b, 125c, 125d, 125e, 125f, 125g) de la surface profilée.

8. Scanner à faisceau laser (106 ; 206 ; 506) selon l'une quelconque des revendications 5 à 7, dans lequel l'optique de terminaison de fibre et le support sont formés à partir d'un substrat unitaire.

9. Scanner à faisceau laser (106 ; 206 ; 506) selon l'une quelconque des revendications 5 à 7, dans lequel l'optique de terminaison de fibre (123a, 223a. 523a) et le support (123b, 223b, 523b) sont des pièces séparées comprenant des formations de positionnement qui positionnent les deux pièces l'une par rapport à l'autre lorsqu'elles sont connectées ensemble.

10. Scanner à faisceau laser (106 ; 206 ; 506) selon l'une quelconque des revendications 5 à 9, dans lequel le support (123b, 223b, 523b) et/ou l'optique de terminaison de fibre (123a, 223a, 523a) sont formés en utilisant un processus d'inscription au laser et de gravure chimique.

11. Scanner à faisceau laser (106 ; 206 ; 506) selon l'une quelconque des revendications précédentes, dans lequel les extrémités de sortie des fibres optiques (121a, 121b, 121c ; 221a, 221b, 221c ; 521a, 521b, 521c) sont soudées ou fusionnées à l'optique de terminaison de fibre (123a, 223a, 523a).

12. Scanner à faisceau laser (106 ; 206 ; 506) selon l'une quelconque des revendications précédentes, dans lequel l'optique de positionnement de faisceaux laser (120 ; 220 ; 520) comprend au moins un miroir inclinable pour diriger les faisceaux laser vers différents emplacements sur la surface de travail, et peut comprendre deux miroirs inclinables autour d'axes orthogonaux ou deux miroirs inclinables autour d'axes non orthogonaux.

13. Scanner à faisceau laser (106) selon la revendication 12 lorsqu'elle dépend de la revendication 4, comprenant une optique de focalisation dynamique (129) pour maintenir une focalisation des faisceaux laser dans un plan d'une surface de travail (124) à mesure que les faisceaux sont dirigés sur la surface de travail (124) par les miroirs inclinables, dans lequel le couvercle d'extrémité (123) est monté sur un boîtier (126) du scanner laser (106) par une flexion (118) qui permet l'ajustement d'une position du couvercle d'extrémité (123) par rapport à l'optique de positionnement de faisceaux laser (120) et à l'optique de focalisation dynamique (129).

14. Scanner à faisceau laser (106 ; 206 ; 506) selon l'une quelconque des revendications précédentes, comprenant une optique d'ajustement de faisceau laser (350) pour ajuster dynamiquement les positions relatives des faisceaux laser (122a, 122b, 122c ; 222a, 222b, 222c ; 522a, 522b, 522c) sur la surface de travail (124 ; 224 ; 524), dans lequel l'optique d'ajustement de faisceau laser (350) peut comprendre une pluralité de parties déplaçables individuellement (351a, 35b, 351c, 351d), par exemple des parties de miroir, chaque partie déplaçable (351a, 35b, 351c, 351d) étant agencée pour diriger un ou un sous-ensemble des faisceaux laser (122a, 122b, 122c ; 222a, 222b, 222c ; 522a, 522b, 522c).

15. Scanner à faisceau laser (106 ; 206 ; 506) selon l'une quelconque des revendications précédentes, dans lequel les extrémités de sortie des fibres optiques (121a, 121b, 121c ; 221a, 221b, 221c ; 521a, 521b, 521c) sont agencées selon un motif à symétrie de rotation autour d'un axe optique du scanner à faisceau laser (106 ; 206 ; 506), tel qu'un motif triangulaire, hexagonal ou carré.

16. Scanner à faisceau laser (106 ; 206 ; 506) selon l'une quelconque des revendications précédentes, dans lequel l'optique de terminaison de fibre et les extrémités de sortie des fibres optiques (121a, 121b, 121c ; 221a, 221b, 221c ; 521a, 521b, 521c) peuvent tourner autour d'un axe optique du scanner à faisceau laser (106 ; 206 ; 506).

17. Scanner à faisceau laser (106 ; 206 ; 506) selon l'une quelconque des revendications précédentes, dans lequel le scanner à faisceau laser (106 ; 206 ; 506) comprend un contrôleur pour commander le mouvement de l'optique de positionnement de faisceaux laser (120 ; 220 ; 520), le contrôleur étant agencé pour commander l'optique de positionnement de faisceaux laser (120 ; 220 ; 520) pour balayer les faisceaux laser (122a, 122b, 122c ; 222a, 222b, 222c ; 522a, 522b, 522c) sur la surface de travail (124 ; 224 ; 524) pour former un ensemble de premières pistes avec un premier passage des faisceaux laser (122a, 122b, 122c ; 222a, 222b, 222c ; 522a, 522b, 522c) le long de la surface de travail (124 ; 224 ; 524) et un ensemble de deuxièmes pistes avec un deuxième passage des faisceaux laser (122a, 122b, 122c ; 222a, 222b, 222c ; 522a, 522b, 522c) le long de la surface de travail (124 ; 224 ; 524), dans lequel certaines des deuxièmes pistes sont intercalées entre certaines des premières pistes.

18. Appareil de fabrication additive comprenant un scanner à faisceau laser (106 ; 206 ; 506) selon l'une quelconque des revendications 1 à 17.

19. Appareil de fabrication additive selon la revendication 18, comprenant un contrôleur pour commander le scanner à faisceau laser (106 ; 206 ; 506) pour balayer les faisceaux laser (122a, 122b, 122c ; 222a, 222b, 222c ; 522a, 522b, 522c) le long de pistes qui s'étendent dans différentes directions de balayage pour des couches successives, le contrôleur étant en outre agencé pour commander les lasers qui génèrent les faisceaux laser (122a, 122b, 122c ; 222a, 222b, 222c ; 522a, 522b, 522c) de sorte que différents sous-ensembles des faisceaux laser (122a, 122b, 122c ; 222a, 222b, 222c ; 522a, 522b, 522c) soient utilisés pour former les pistes s'étendant dans différentes directions de balayage.
